# EUROPEAN PATENT APPLICATION

(11) **EP 2 458 488 A2**
(43) Date of publication of application: **30.05.2012**
(21) Application number: 11009286.3
(22) Date of filing: 23.11.2011
(51) Int. Cl.: G06F 3/048

(54) **Mobile terminal and operation control method thereof**

(30) Priority: 25.11.2010 KR 20100118124
(71) Applicant: LG Electronics, Inc., Yeongdeungpo-gu Seoul 150-721 (KR)
(72) Inventor: Choi, Kyungdong, Seoul 153-023 (KR)
(74) Representative: Beyer, Andreas

(57) **Abstract**

A mobile terminal and an operation control method thereof are provided. The operation control method includes displaying a first image on a display module; in response to a user input with first directivity being detected from the first image, displaying a second image obtained by applying a different screen effect from a current screen effect applied to the first image on the display module; in response to a user input with second directivity being detected from the second image, displaying a third image on the display module; and in response to a user input with the first directivity being detected from the third image, displaying a fourth image obtained by applying a different screen effect from a current screen effect applied to the third image on the display module. Therefore, it is possible to effectively control various operations performed by the mobile terminal by using a user input with directivity such as a flick input or a drag input.

## Description

### CROSS-REFERENCE TO RELATED APPLICATION

This application claims the priority benefit of Korean Patent Application No. 10-2010-0118124, filed on November 25, 2010 in the Korean Intellectual Property Office, the disclosure of which is incorporated herein by reference.

### BACKGROUND OF THE INVENTION

### Field of the Invention

The present invention relates to a mobile terminal and an operation control method thereof, and more particularly, to a mobile terminal and an operation control method of the mobile terminal, in which various operations performed by the mobile terminal can be controlled using a user input with directivity such as a flick input or a drag input.

### Description of the Related Art

Mobile terminals are portable devices, which can provide users with various services such as a voice calling service, a video calling service, an information input/output service, and a data storage service.

As the types of services provided by mobile terminals diversify, an increasing number of mobile terminals have been equipped with various complicated functions such as capturing photos or moving pictures, playing music files or moving image files, providing game programs, receiving broadcast programs and providing wireless internet services and have thus evolved into multimedia players.

Various attempts have been made to realize such complicated functions as hardware devices or software programs. For example, various user interface (UI) environments, in which users are allowed to easily search for and choose desired functions, have been developed. In addition, the demand for various designs for mobile terminals has steadily grown due to a growing tendency of considering mobile terminals as personal items that can represent personal individuality.

However, there is a clear limit in allocating sufficient space for a UI such as a display or a keypad without compromising the mobility and the portability of the mobile terminal. Therefore, a method is needed to control the operation of a mobile terminal using a new input/output method in an effort to make efficient use of a variety of complicated functions provided by a mobile terminal.

### SUMMARY OF THE INVENTION

The present invention provides a mobile terminal and an operation control method of the mobile terminal, in which various operations performed by the mobile terminal can be controlled using a user input with directivity such as a flick input or a drag input.

In one general aspect, there is provided an operation control method of a mobile terminal, the operation control method including: displaying a first image on a display module; in response to a user input with first directivity being detected from the first image, displaying a second image obtained by applying a different screen effect from a current screen effect applied to the first image on the display module; in response to a user input with second directivity being detected from the second image, displaying a third image on the display module; and in response to a user input with the first directivity being detected from the third image, displaying a fourth image obtained by applying a different screen effect from a current screen effect applied to the third image on the display module.

In another general aspect, there is provided a mobile terminal, including: a display module configured to display a first image; and a controller configured to display a second image obtained by applying a different screen effect from a current screen effect applied to the first image on the display module in response to a user input with first directivity being detected from the first image, display a third image on the display module in response to a user input with second directivity being detected from the second image, and display a fourth image obtained by applying a different screen effect from a current screen effect applied to the third image on the display module in response to a user input with the first directivity being detected from the third image.

In another general aspect, there is provided an operation control method of a mobile terminal, the operation control method including: displaying an electronic document editor screen on a display module; in response to a user input with first directivity being detected from the electronic document editor screen, changing a frame of the electronic document editor screen; and in response to a user input with second directivity being detected from the electronic document editor screen, changing an editing tool for the electronic document screen.

In another general aspect, there is provided a mobile terminal, including: a display module configured to display an electronic document editor screen; and a controller configured to change a frame of the electronic document editor screen in response to a user input with first directivity being detected from the electronic document editor screen and change an editing tool for the electronic document screen in response to a user input with second directivity being detected from the electronic document editor screen.

In another general aspect, there is provided an operation control method of a mobile terminal, the operation control method including: displaying a multimedia player screen on a display module; switching the mobile terminal from one display mode to another display mode in response to a user input with first directivity being detected from the multimedia player screen; and switching the mobile terminal from one equalizer mode to another equalizer mode in response to a user input with second directivity being detected from the multimedia player screen.

In another general aspect, there is provided a mobile terminal, including: a display module configured to displaying a multimedia player screen; and a controller configured to switch the mobile terminal from one display mode to another display mode in response to a user input with first directivity being detected from the multimedia player screen and switch the mobile terminal from one equalizer mode to another equalizer mode in response to a user input with second directivity being detected from the multimedia player screen.

In another general aspect, there is provided an operation control method of a mobile terminal, the operation control method including: displaying a first application execution screen belonging to a first group on a display module; in response to a user input with first directivity being detected from the first application execution screen, displaying a second application execution screen belonging to the first group on the display module; and in response to a user input with second directivity being detected from the first application execution screen, displaying a last previous application execution screen belonging to a second group on the display module.

In another general aspect, there is provided a mobile terminal, including: a display module configured to display a first application execution screen belonging to a first group; and a controller configured to display a second application execution screen belonging to the first group on the display module in response to a user input with first directivity being detected from the first application execution screen, and display a last previous application execution screen belonging to a second group on the display module in response to a user input with second directivity being detected from the first application execution screen.

In another general aspect, there is provided an operation control method of a mobile terminal, the operation control method including: displaying a first webpage provided by a first website on a display module; displaying a second webpage provided by the first website on the display module in response to a user input with first directivity being detected from the first webpage; and displaying a last previous webpage provided by a second website in response to a user input with second directivity being detected from the first webpage.

In another general aspect, there is provided a mobile terminal, including: a display module configured to display a first webpage provided by a first website; and a controller configured to display a second webpage provided by the first website on the display module in response to a user input with first directivity being detected from the first webpage and display a last previous webpage provided by a second website in response to a user input with second directivity being detected from the first webpage.

### BRIEF DESCRIPTION OF THE DRAWINGS

The above and other features and advantages of the present invention will become more apparent by describing in detail preferred embodiments thereof with reference to the attached drawings in which:
- FIG. 1: is a block diagram of a mobile terminal according to an exemplary embodiment of the present invention;
- FIG. 2: is a front perspective view of the mobile terminal shown in FIG. 1;
- FIG. 3: is a rear perspective view of the mobile terminal shown in FIG. 2;
- FIG. 4: is a flowchart illustrating an operation control method of a mobile terminal, according to a first exemplary embodiment of the present invention;
- FIG. 5: is a flowchart illustrating an operation control method of a mobile terminal, according to a second exemplary embodiment of the present invention;
- FIG. 6: is a flowchart illustrating an operation control method of a mobile terminal, according to a third exemplary embodiment of the present invention; and
- FIGS. 7 through 14: are diagrams illustrating the exemplary embodiments of FIGS. 4 through 6.

### DETAILED DESCRIPTION OF THE INVENTION

The present invention will hereinafter be described in detail with reference to the accompanying drawings in which exemplary embodiments of the invention are shown.

The term 'mobile terminal', as used herein, may indicate a mobile phone, a smart phone, a laptop computer, a digital broadcast receiver, a personal digital assistant (PDA), a portable multimedia player (PMP), a camera, a navigation device, a tablet computer, or an electronic book (e-book) reader. In this disclosure, the terms 'module' and 'unit' can be used interchangeably.

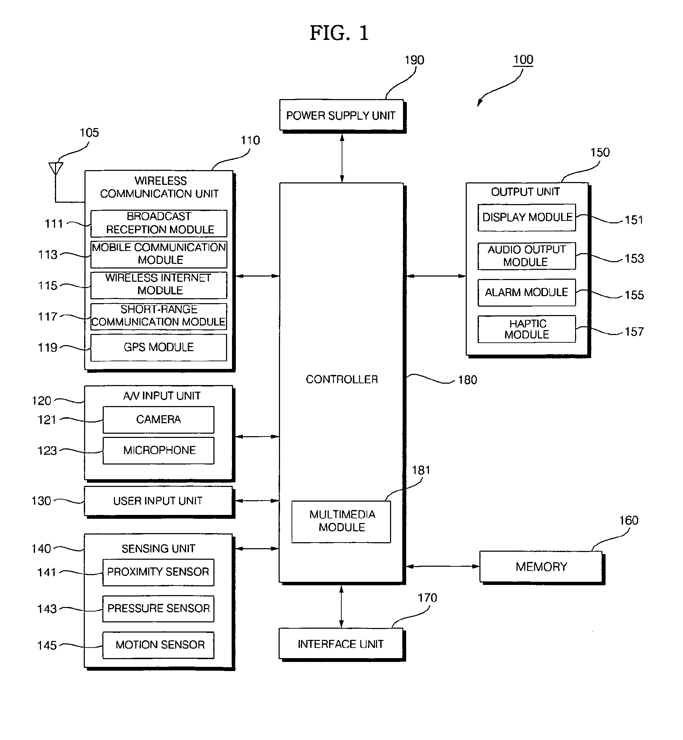

FIG. 1 illustrates a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Two or more of the wireless communication unit 110, the A/V input unit 120, the user input unit 130, the sensing unit 140, the output unit 150, the memory 160, the interface unit 170, the controller 180, and the power supply unit 190 may be incorporated into a single unit, or some of the wireless communication unit 110, the A/V input unit 120, the user input unit 130, the sensing unit 140, the output unit 150, the memory 160, the interface unit 170, the controller 180, and the power supply unit 190 may be divided into two or more smaller units.

The wireless communication unit 110 may include a broadcast reception module 111, a mobile communication module 113, a wireless internet module 115, a short-range communication module 117, and a global positioning system (GPS) module 119.

The broadcast reception module 111 may receive a broadcast signal and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

The broadcast-related information may include broadcast channel information, broadcast program information and/or broadcast service provider information. The broadcast signal may be a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this case, the broadcast-related information may be received by the mobile communication module 113, rather than by the broadcast reception module 111. The broadcast-related information may come in various forms. For example, the broadcast-related information may be electronic program guide (EPG) of digital multimedia broadcasting (DMB) or may be electronic service guide (ESG) of digital video broadcast-handheld (DVB-H).

The broadcast reception module 111 may receive the broadcast signal using various broadcasting systems such as digital multimedia broadcasting-terrestrial (DMB-T), digital multimedia broadcasting-satellite (DMB-S), media forward link only (MediaFLO), DVB-H, and integrated services digital broadcast-terrestrial (ISDB-T). In addition, the broadcast reception module 111 may be configured to be suitable for nearly all types of broadcasting systems other than those set forth herein. The broadcast signal and/or the broadcast-related information received by the broadcast reception module 111 may be stored in the memory 160.

The mobile communication module 113 may transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive position information from a plurality of GPS satellites.

The A/V input unit 120 may be used to receive audio signals or video signals. The A/V input unit 120 may include a camera 121 and a microphone 123. The camera 121 may process various image frames such as still images or moving images captured by an image sensor during a video call mode or an image capturing mode. The image frames processed by the camera 121 may be displayed by a display module 151.

The image frames processed by the camera 121 may be stored in the memory 160 or may be transmitted to an external device through the wireless communication unit 110. The mobile terminal 100 may include two or more cameras 121.

The microphone 123 may receive external sound signals during a call mode, a recording mode, or a voice recognition mode with the use of a microphone and may convert the sound signals into electrical sound data. In the call mode, the mobile communication module 113 may convert the electrical sound data into data that can be readily transmitted to a mobile communication base station and then output the data obtained by the conversion. The microphone 123 may use various noise removal algorithms to remove noise that may be generated during the reception of external sound signals.

The user input unit 130 may generate key input data based on user input for controlling the operation of the mobile terminal 100. The user input unit 130 may be implemented as a keypad, a dome switch, or a static pressure or capacitive touch pad which is capable of receiving a command or information by being pushed or touched by a user. Alternatively, the user input unit 130 may be implemented as a wheel, a jog dial or wheel, or a joystick capable of receiving a command or information by being rotated. Still alternatively, the user input unit 130 may be implemented as a finger mouse. In particular, in a case in which the user input unit 130 is implemented as a touch pad and forms a mutual layer structure with the display module 151, the user input unit 130 and the display module 151 may be collectively referred to as a touch screen.

The sensing unit 140 determines a current state of the mobile terminal 100 such as whether the mobile terminal 100 is opened up or closed, the position of the mobile terminal 100 and whether the mobile terminal 100 is placed in contact with a user, and generates a sensing signal for controlling the operation of the mobile terminal 100. For example, when the mobile terminal 100 is a slider-type mobile phone, the sensing unit 140 may determine whether the mobile terminal 100 is opened up or closed. In addition, the sensing unit 140 may determine whether the mobile terminal 100 is powered by the power supply unit 190 and whether the interface unit 170 is connected to an external device.

The sensing unit 140 may include a detection sensor 141, a pressure sensor 143 and a motion sensor 145. The detection sensor 141 may determine whether there is an object nearby and approaching the mobile terminal 100 without any mechanical contact with the entity. More specifically, the detection sensor 141 may detect an object that is nearby and approaching by detecting a change in an alternating magnetic field or the rate of change of static capacitance. The sensing unit 140 may include two or more detection sensors 141.

The pressure sensor 143 may determine whether pressure is being applied to the mobile terminal 100 or may measure the level of any pressure applied to the mobile terminal 100. The pressure sensor 143 may be installed in a certain part of the mobile terminal 100 where the detection of pressure is necessary. For example, the pressure sensor 143 may be installed in the display module 151. In this case, it is possible to differentiate a typical touch input from a pressure touch input, which is generated using a higher pressure level than that used to generate a typical touch input, based on data provided by the pressure sensor 143. In addition, when a pressure touch input is received through the display module 151, it is possible to determine the level of pressure applied to the display module 151 upon the detection of a pressure touch input based on data provided by the pressure sensor 143.

The motion sensor 145 may determine the location and motion of the mobile terminal 100 using an acceleration sensor or a gyro sensor.

In the meantime, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, one or more acceleration sensors representing two or three axial directions are incorporated into a single package. There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate.

Gyro sensors are sensors for measuring angular velocity, and may determine the relative direction of the rotation of the mobile terminal 100 to a reference direction.

The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, in response to the mobile terminal 100 being placed in a call mode, the display module 151 may display a user interface (UI) or a graphic user interface (GUI) for making or receiving a call. In response to the mobile terminal 100 being placed in a video call mode or an image capturing mode, the display module 151 may display a UI or a GUI for capturing or receiving images.

In a case in which the display module 151 and the user input unit 130 form a layer structure together and are thus implemented as a touch screen, the display module 151 may be used as both an output device and an input device. In a case in which the display module 151 is implemented as a touch screen, the display module 151 may also include a touch screen panel and a touch screen panel controller. The touch screen panel is a transparent panel attached onto the exterior of the mobile terminal 100 and may be connected to an internal bus of the mobile terminal 100. The touch screen panel keeps monitoring whether the touch screen panel is being touched by the user. Once a touch input to the touch screen panel is received, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules.

The display module 151 may include at least one of a liquid crystal display (LCD), a thin film transistor (TFT)-LCD, an organic light-emitting diode (OLED), a flexible display, and a three-dimensional (3D) display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the mobile terminal 100 such as receiving a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal. More specifically, the alarm module 155 may output an alarm signal upon receiving a call signal or a message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that can be perceived by the user. In a case in which the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a phonebook, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the memory 160 on the internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

In a case in which the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call. The controller 180 may include a multimedia player module 181, which plays multimedia data. The multimedia player module 181 may be implemented as a hardware device and may be installed in the controller 180. Alternatively, the multimedia player module 181 may be implemented as a software program.

The power supply unit 190 may be supplied with power by an external power source or an internal power source and may supply power to the other components in the mobile terminal 100.

The mobile terminal 100 may include a wired/wireless communication system or a satellite communication system and may thus be able to operate in a communication system capable of transmitting data in units of frames or packets.

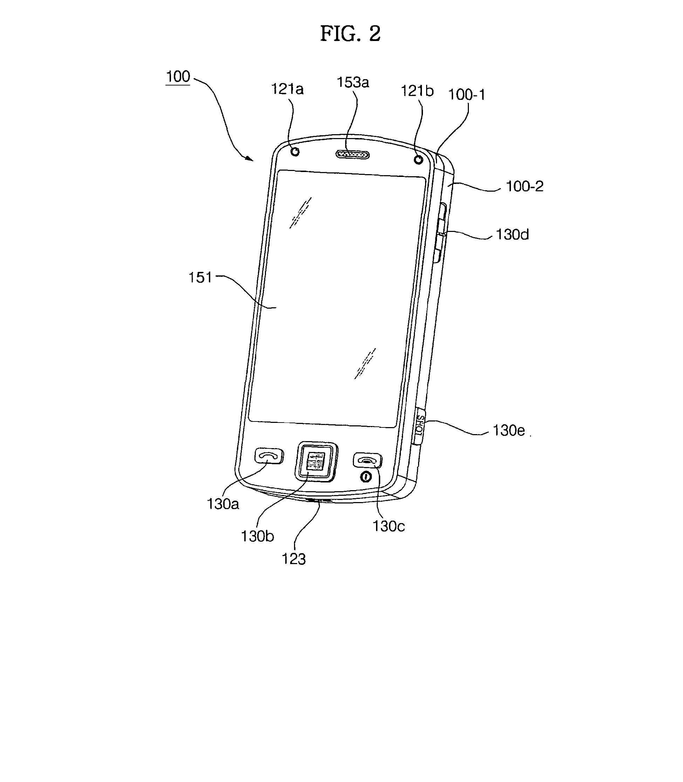

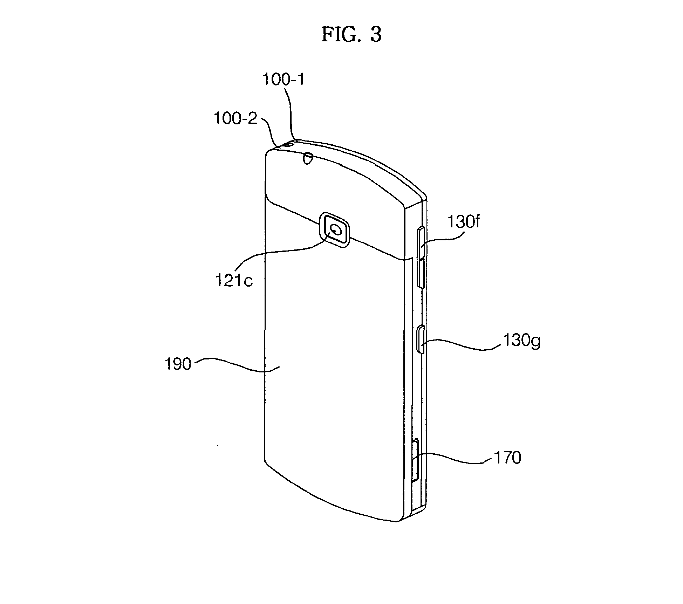

The exterior structure of the mobile terminal 100 will hereinafter be described in detail with reference to FIGS. 2 and 3. The present invention can be applied to nearly all types of mobile terminals such as a folder-type, a bar-type, a swing-type and a slider-type mobile terminal. However, for convenience, it is assumed that the mobile terminal 100 is a bar-type mobile terminal equipped with a full touch screen.

FIG. 2 illustrates a front perspective view of the mobile terminal 100, and FIG. 3 illustrates a rear perspective view of the mobile terminal 100. Referring to FIG. 2, the exterior of the mobile terminal 100 may be formed by a front case 100-1 and a rear case 100-2. Various electronic devices may be installed in the space formed by the front case 100-1 and the rear case 100-2. The front case 100-1 and the rear case 100-2 may be formed of a synthetic resin through injection molding. Alternatively, the front case 100-1 and the rear case 100-2 may be formed of a metal such as stainless steel (STS) or titanium (Ti).

The display module 151, a first audio output module 153a, first and second cameras 121a and 121b, and first, second, and third user input modules 130a, 130b, and 130c may be disposed in the main body of the mobile terminal 100, and particularly, on the front case 100-1. Fourth and fifth user input modules 130d and 130e and the microphone 123 may be disposed on one side of the rear case 100-2.

In a case in which a touch pad is configured to overlap the display module 151 and thus to form a mutual layer structure, the display module 151 may serve as a touch screen. Thus, the user can enter various information to the mobile terminal 100 simply by touching the display module 151.

The first audio output module 153a may be implemented as a receiver or a speaker. The first and second cameras 121a and 121b may be configured to be suitable for capturing a still or moving image of the user. The first and second cameras 121a and 121b may be used to control a 3D pointer during a stereoscopic 3D mode.

The microphone 123 may be configured to properly receive the user's voice or other sounds.

The first, second, third, fourth, and fifth user input modules 130a, 130b, 130c, 130d, and 130e and sixth and seventh user input modules 130f and 130g may be collectively referred to as the user input unit 130, and any means can be employed as the first, second, third, fourth, fifth, sixth, and seventh user input modules 130a, 130b, 130c, 130d, 130e, 130f, and 130g so long as it can operate in a tactile manner. For example, the user input unit 130 may be implemented as a dome switch or a touch pad that can receive a command or information according to a pressing or a touch operation by the user, or may be implemented as a wheel or jog type for rotating a key or as a joystick. In terms of function, the first, second, and third user input modules 130a, 130b, and 130c may operate as function keys for entering a command such as start, end, or scroll, the fourth user input module 130d may operate as a function key for selecting an operating mode for the mobile terminal 100, and the fifth user input module 130e may operate as a hot key for activating a special function within the mobile terminal 100.

Referring to FIG. 3, a third camera 121c may be additionally provided at the rear of the rear case 100-2, and the sixth and seventh user input modules 130f and 130g and the interface unit 170 may be disposed on one side of the rear case 100-2.

The third camera 121c may have an image capture direction which is substantially the opposite to that of the first and second cameras 121a and 121b, and may have a different resolution from that of the first camera 121a.

A flash and a mirror may be disposed near the third camera 121c. Another camera may be additionally provided near the third camera 121c and may thus be used to capture a stereoscopic 3D image.

When the third camera 121c captures an image of a subject, the flash may illuminate the subject. The mirror may allow the user to see him- or herself for capturing his or her own image with the third camera 121c.

Another audio output module (not shown) may be additionally provided on the rear case 100-2. The audio output module on the rear case 100-2 may realize a stereo function along with the audio output module 153 on the front case 100-1. The audio output module on the rear case 100-2 may also be used in a speaker-phone mode.

The interface unit 170 may used as a passage allowing the mobile terminal 100 to exchange data with an external device either through a fixed line or wirelessly.

A broadcast signal reception antenna may be disposed at one side of the front or rear case 100-1 or 100-2, in addition to an antenna used for call communication. The broadcast signal reception antenna may be installed such that it can be extended from the front or rear case 100-1 or 100-2.

The power supply unit 190 may be mounted on the rear case 100-2 and may supply power to the mobile terminal 100. The power supply unit 190 may be, for example, a chargeable battery which can be detachably combined to the rear case 100-2 for being charged.

The third camera 121c and other elements that have been described above as being disposed in the rear case 100-2 may be disposed elsewhere in the mobile terminal 100. The third camera 121c may be optional in a case in which the first or second camera 121a or 121b is configured to be rotatable and thus to cover the image capture direction of the third camera 121c.

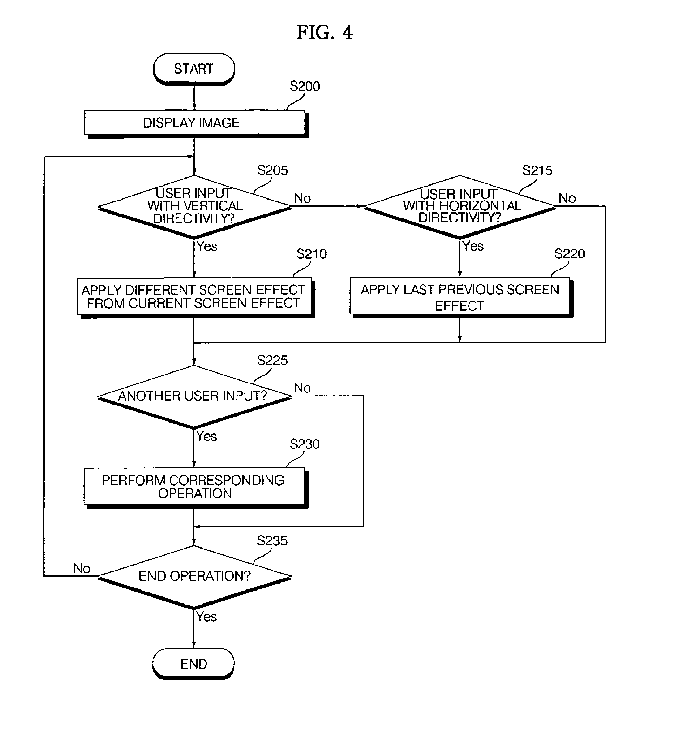

FIG. 4 illustrates an operation control method of a mobile terminal, according to an exemplary embodiment of the present invention. Referring to FIG. 4, in response to an image viewer menu being selected or a user command being received, the controller 180 may display a first image selected by a user on the display module 151 (S200).

In response to a user input (such as a flick input or a drag input) with vertical directivity being detected from the first image, the controller 180 may apply a predetermined screen effect to the first image (S210).

The term 'flick input,' as used herein, indicates, but is not limited to, a user input generated by gently scratching the surface of the display module 151 with an object such as a finger. A touch input and a flick input may be distinguished from each other by how long the object (such as a finger) used to generate them is placed in contact with the surface of the display module 151.

For example, in response to a user input with downward directivity being detected from the first image, a current screen effect applied to the first image may be replaced with another screen effect, and in response to a user input with upward directivity being detected from the first image, the first image may be returned to a last previous screen effect.

Examples of the predetermined screen effect applied in operation S210 include a filter effect such as 'sepia,' 'negative,' 'black-and-white,' 'sunrise,' or 'aqua,' a fun effect such as a photo of a crown or a princess attached to a boundary of an image and a decorative effect such as a decorative image frame.

Examples of the predetermined screen effect applied in operation S210 also include 'noise,' 'render,' 'brush Strokes,' 'video,' 'sharpen,' 'sketch,' 'stylize,' 'artistic,' 'distort,' 'texture,' `pixelate,' and 'blur' effects. A menu for setting a screen effect to be applied to an image in response to a user input with directivity being detected from the image may be configured to be additionally provided.

In response to a horizontal flick or drag input being detected from the first image (S215), the controller 180 displays a second image, which is different from the first image, on the display module 151 and applies the last previous screen effect to the second image (S220).

For example, in response to a top-to-bottom flick being detected from the image, the first image may be displayed in a sepia tone, and then, in response to a right-to-left flick being detected from the first image, the second image may be displayed, instead of the first image. In response to a top-to-bottom flick being detected from the second image, the sepia effect may be applied to the second image, and then, in response to a left-to-right flick being detected from the second image, the first image in the sepia tone may be displayed again.

In response to another user input than a user input with directivity being detected (S225), the controller 180 performs an operation corresponding to the detected user input (S230).

Operations S205 through S230 may be repeatedly performed until the user chooses to end the above-mentioned operation (S235).

According to this exemplary embodiment, it is possible to effectively align images with various screen affects applied thereto in response to a user input with directivity being detected.

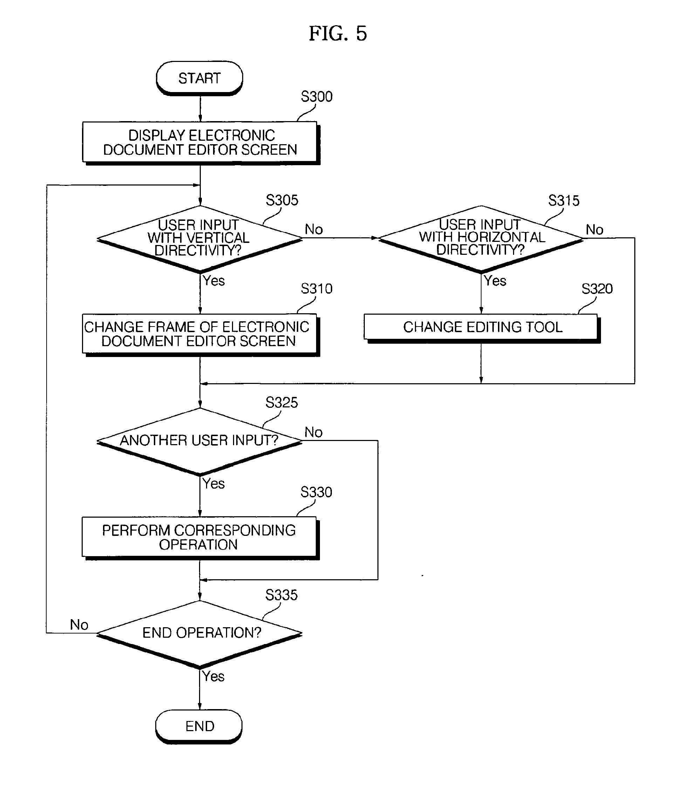

FIG. 5 illustrates an operation control method of a mobile terminal, according to another exemplary embodiment of the present invention, and more particularly, how to change the frame of an electronic document editor screen or an editing tool for the electronic document editor screen.

Referring to FIG. 5, in response to, for example, a user command, being received, the controller 180 displays an electronic document editor screen on the display module 151 (S300).

Electronic documents are a type of document data that can be written or transmitted in an electronic form by a device such as a computer capable of processing data. Examples of electronic documents include a 'new text message' screen, a 'new email' screen, and a 'new memo' screen.

In response to a user input with vertical directivity, such as a vertical flick or drag, being detected from the electronic document editor screen (S305), the controller 180 changes the frame of the electronic document editor screen (S310). The change of the frame of the electronic document editor screen may be performed for various purposes including a decorative purpose for a text message or email being written on the electronic document editor screen.

For example, the controller 180 may replace the frame of the electronic document editor screen with another frame in response to a user input with downward directivity being detected from the electronic document editor screen, and may replace the frame of the electronic document editor frame with a last previous frame in response to a user input with upward directivity being detected from the electronic document editor screen.

In response to a user input with horizontal directivity, such as a horizontal flick or drag, being detected from the electronic document editor screen (S315), the controller 180 may replace a current editing tool for the electronic document editor screen with another editing tool (S320). As a result, a description of the current editing tool and/or icons relevant to the current editing tool may also be replaced.

In response to a user input, other than a user input with directivity, being detected from the electronic document editor screen (S325), the controller 180 performs an operation corresponding to the detected user input (S330).

Operations S305 through S330 are repeatedly performed until the current operation is complete (S335).

According to this exemplary embodiment, it is possible to easily change the frame of an electronic document editor screen or easily select an editing tool for the electronic document editor screen in response to a user input with directivity being detected from the electronic document editor screen.

According to this exemplary embodiment, the frame of an electronic document editor screen or the font of text on the electronic document editor screen may be configured to be changed in response to a horizontal user input being detected from the electronic document editor screen. In this example, the font of text on the electronic document editor screen may be sequentially changed in a predefined default order in response to a user input with downward directivity being detected from the electronic document editor screen, or may be sequentially changed in a user-defined order in response to a user input with upward directivity being detected from the electronic document editor screen.

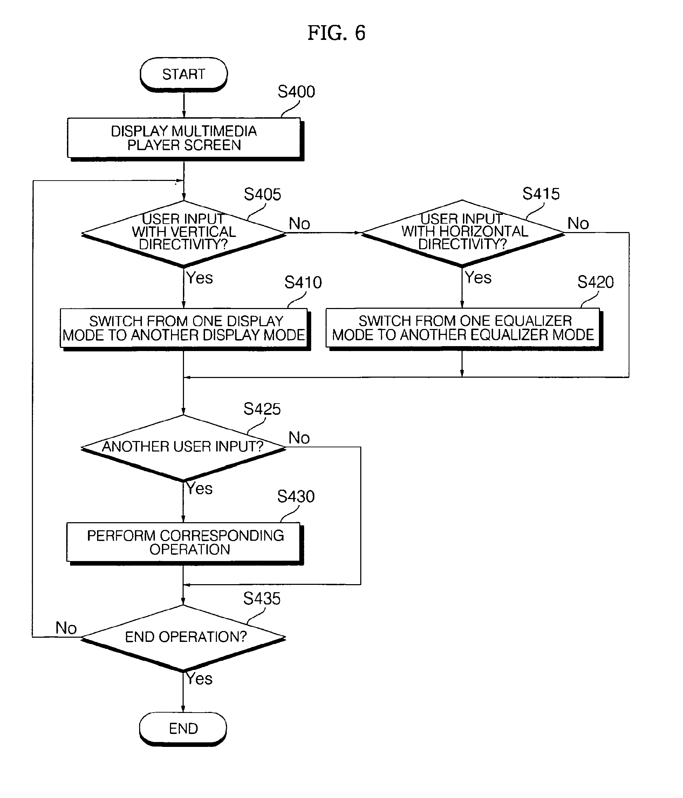

FIG. 6 illustrates an operation control method of a mobile terminal, according to another exemplary embodiment of the present invention, and more particularly, how to change a display mode or an equalizer mode in response to a user input with directivity being detected from a multimedia player screen.

Referring to FIG. 6, in response to, for example, a user command, being detected, the controller 180 displays a multimedia player screen for playing a music file or a video file on the display module 151 (S400).

In response to a user input with vertical directivity, such as a vertical flick or drag, being detected from the multimedia player screen (S405), the controller 180 switches the mobile terminal 100 from one display mode to another display mode (S410).

For example, in the case of playing a music file, the controller 180 may sequentially switch the mobile terminal 100 from a standard audio play mode to a lyrics display mode and from the lyrics display mode to a file information display mode. In the case of playing a video file, the controller 180 may sequentially switch the mobile terminal 100 from a standard video play mode to a Korean subtitle mode and from the Korean subtitle mode to a full screen display mode.

For example, the controller 180 may switch the mobile terminal 100 may switch the mobile terminal 100 from a current display mode to another display mode in response to a user input with downward directivity being detected from the multimedia player screen, and may switch the mobile terminal 100 from the current display mode to a last previous display mode in response to a user input with upward directivity being detected from the multimedia player screen.

In response to the mobile terminal 100 being switched from one display mode to another display mode, the color of the edges of the multimedia player screen may be changed.

In response to a user input with horizontal directivity, such as a horizontal flick or drag, being detected from the multimedia player screen (S415), the controller 180 may switch the mobile terminal 100 from one equalizer mode to another equalizer mode (S420). For example, the controller 180 may sequentially switch the mobile terminal 100 from a 'rock' mode to a 'pop' mode, from the 'pop' mode to a 'jazz' mode, from the 'jazz' mode to a 'classic' mode, and from the 'classic' mode to a 'vocal' mode.

In response to the mobile terminal 100 being switched from one equalizer mode to another equalizer mode, the background color of the multimedia player screen may be changed. Accordingly, it is possible for a user to easily identify a current setting state of the mobile terminal 100 based on the background color and the color of the edges of the multimedia player screen.

In response to a user input, other than a user input with directivity, being detected from the multimedia player screen (S425), the controller 180 performs an operation corresponding to the detected user input (S430).

Operations S405 through S430 are repeatedly performed until the current operation is complete (5435).

According to this exemplary embodiment, it is possible to easily switch from one display mode to another display mode or from one equalizer mode to another equalizer mode in response to a user input with directivity being detected from a multimedia player screen.

The exemplary embodiments of FIGS. 4 through 6 have been described above, taking an image viewer screen, an electronic document editor screen, and a multimedia player screen as examples, but the present invention is not restricted to these specific examples.

For example, in the case of executing multiple applications in a multitasking mode, the mobile terminal 100 may be configured to be switched between a plurality of application execution screens corresponding to applications belonging to the same application group in response to a user input with downward directivity being detected, and to be switched to a last previous application execution screen in response to a user input with upward directivity being detected.

In response to a user input with horizontal directivity being detected, the mobile terminal 100 may be configured to be switched between a plurality of application execution screens corresponding to applications belonging to different application groups, for example, a media player group, a file viewer group, a web surfing group, a game group, and the like. More specifically, the mobile terminal 100 may be configured to be switched from a current application execution screen to a last previous application execution screen corresponding to an application belonging to a different application group from an application corresponding to the current application execution screen.

In response to a user input with downward directivity being detected from a predetermined webpage screen, the mobile terminal 100 may be configured to display another webpage screen provided by the same website providing the predetermined webpage screen. In response to a user input with upward directivity being detected from the predetermined webpage screen, the mobile terminal 100 may be configured to display a last previous webpage screen provided by the same website providing the predetermined webpage screen. In response to a user input with horizontal directivity being detected from the predetermined webpage screen, the mobile terminal 100 may be configured to display a webpage screen provided by a different website from the website providing the predetermined webpage screen, and more particularly, a last previous webpage screen provided by a different website from the website providing the predetermined webpage screen according to a direction corresponding to the user input.

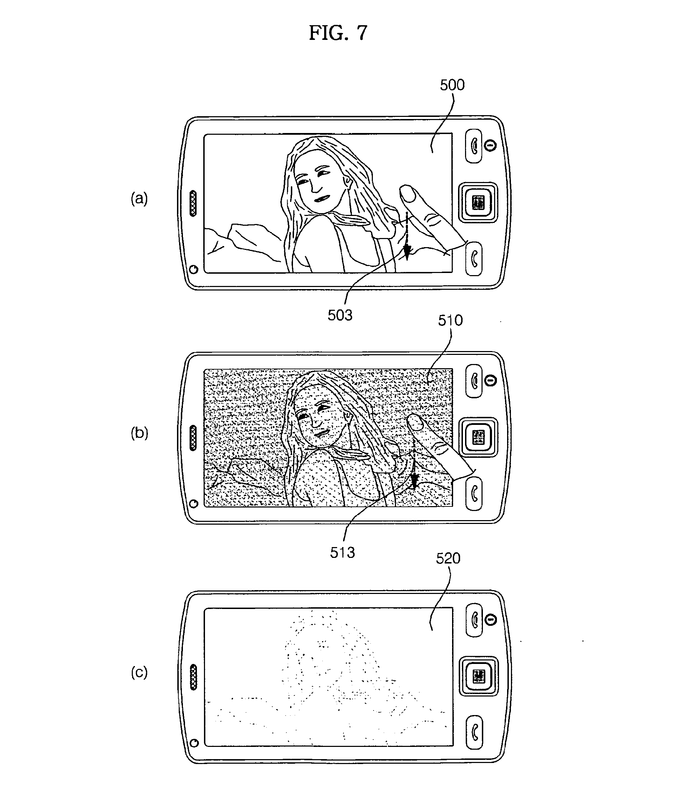

The exemplary embodiments of FIGS. 4 through 6 and other exemplary embodiments will hereinafter be described in detail with reference to FIGS. 7 through 14, which illustrate display screens that can be displayed on the display module 151.

FIGS. 7 through 9 illustrate an example of an operation of the mobile terminal 100 in response to a user input with directivity being detected from an image viewer screen.

Referring to FIGS. 7(a) and 7(b), in response to a top-to-bottom flick or drag 503 being detected from an image viewer screen 500 displaying a first image, a display screen 510 obtained by applying a first screen effect to the first image may be displayed. Referring to FIGS. 7(b) and 7(c), in response to a top-to-bottom flick or drag 513 being detected from the display screen 510, a display screen 520 obtained by applying a second screen effect to the first image may be displayed.

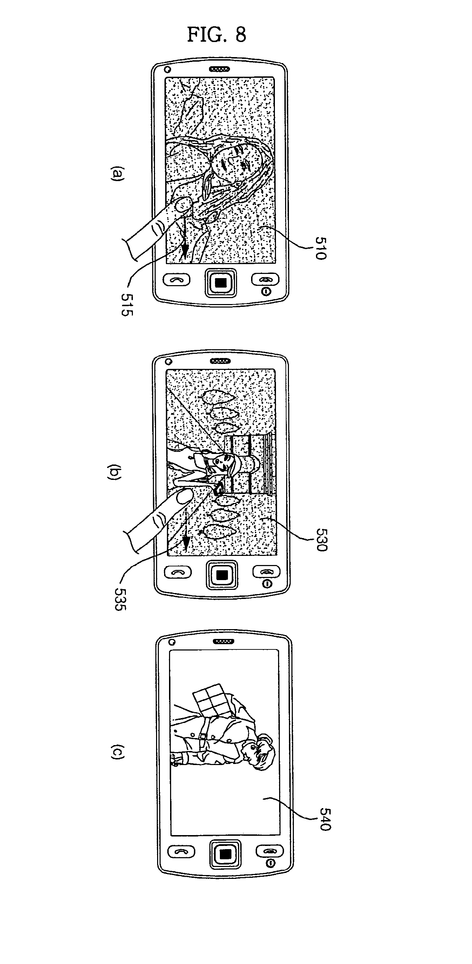

Referring to FIGS. 8(a) and 8(b), in response to a left-to-right flick or drag 515 being detected from the display screen 510 illustrated in FIG. 7(b), a display screen 530 displaying a second image, which is different from the first image, may be displayed. Referring to FIGS. 8(b) and 8(c), in response to a left-to-right flick or drag 535 being detected from the display screen 530, a display screen 540 displaying a third image, which is different from the first and second images, may be displayed.

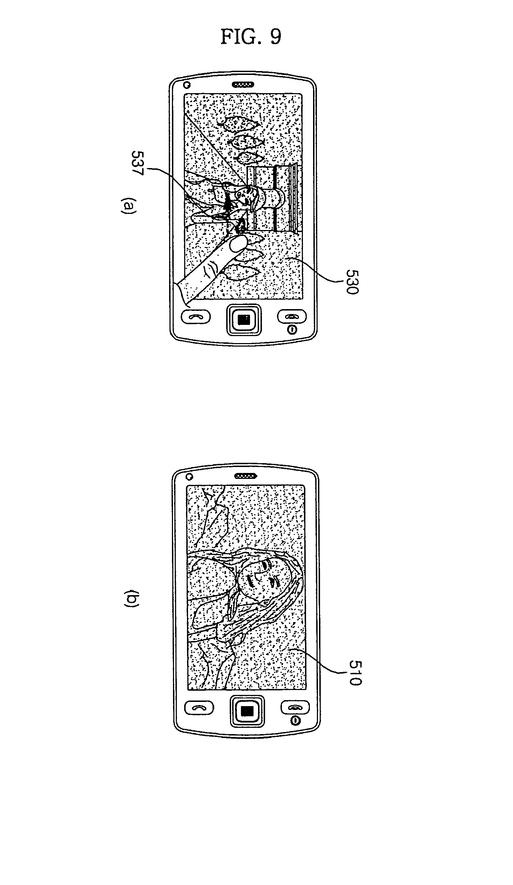

Referring to FIGS. 9(a) and 9(b), in response to a right-to-left flick or drag 537 being detected from the display screen 530 illustrated in FIG. 8(b), the display screen 510 obtained by applying the first screen effect to the first image may be displayed again.

As described above with reference to FIGS. 7 through 9, it is possible to effectively apply different screen effects to an image in response to a user input with vertical directivity being detected, and to readily display an image to which a last previous screen effect is applied in response to a user input with horizontal directivity being detected.

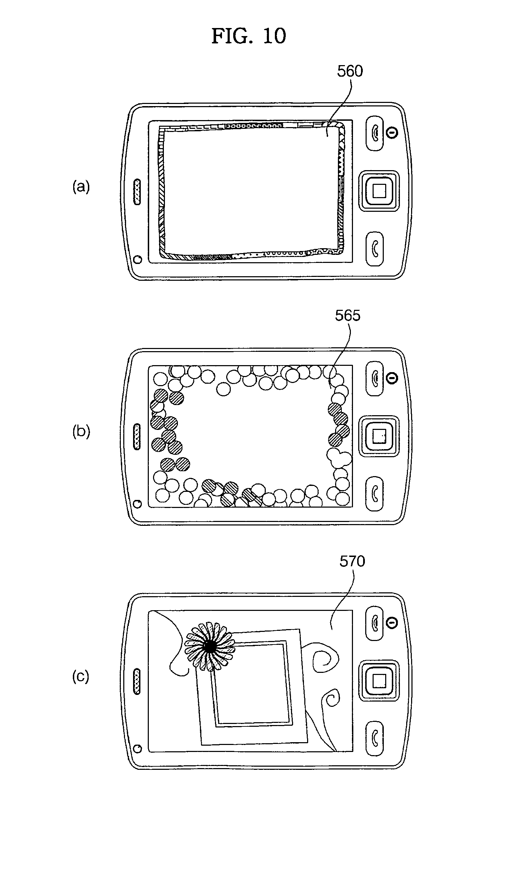

FIG. 10 illustrates display screens having various types of frames. Referring to FIGS. 10(a), 10(b), and 10(c), in response to a user input with directivity being detected, one of a plurality of display screens 560, 565, and 570 having different types of frames may be selected, and may be used as an image viewer screen or an electronic document editor screen. That is, the frame of an image viewer screen or an electronic document editor screen may be changed in response to a user input with directivity being detected from the image viewer screen or the electronic document editor screen.

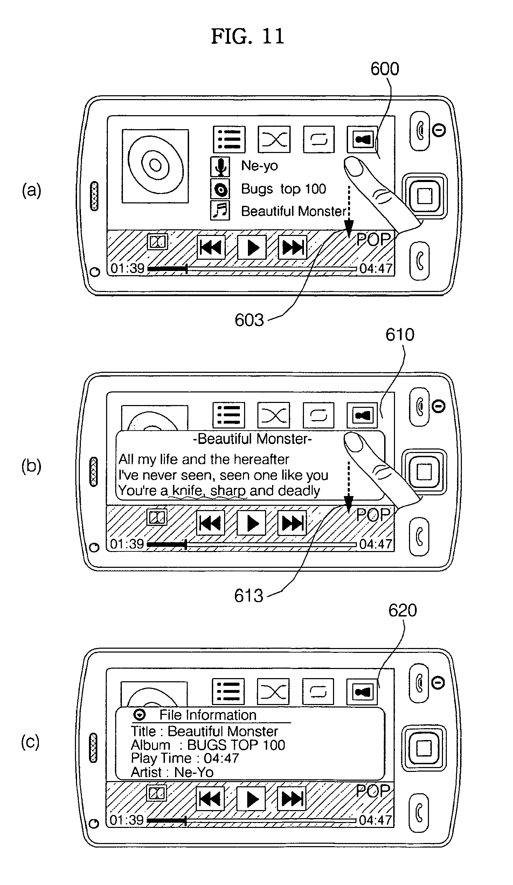

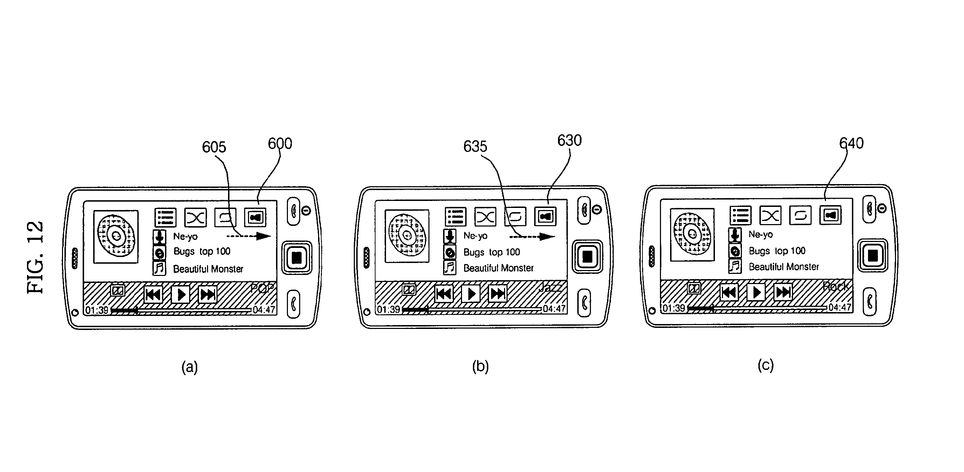

FIGS. 11 and 12 illustrate an operation of the mobile terminal 100 in response to a user input with directivity being detected from a multimedia player screen.

Referring to FIGS. 11(a) and 11(b), in response to a top-to-bottom flick or drag 603 being detected from a multimedia player screen 500, the mobile terminal 100 may be switched to a lyrics display mode, and a display screen 610 showing the lyrics of a song currently being played may be displayed.

Referring to FIGS. 11(b) and 11(c), in response to a top-to-bottom flick or drag 613 being detected from the display screen 610, the mobile terminal 100 may be switched from the lyrics display mode to a file information display mode, and a display screen 620 corresponding to file information corresponding to the current song may be displayed.

Referring to FIGS. 12(a) and 12(b), in response to a left-to-right flick or drag 605 being detected from a multimedia player screen 600, the mobile terminal 100 may be switched from a 'pop' equalizer mode to a 'jazz' equalizer mode, and a display screen 630 corresponding to the 'jazz' equalizer mode may be displayed. Referring to FIGS. 12(b) and 12(c), in response to a left-to-right flick or drag 635 being detected from the display screen 630, the mobile terminal 100 may be switched from the 'jazz' equalizer mode to a 'rock' equalizer mode, and a display screen 640 corresponding to the 'rock' equalizer mode may be displayed.

As described above with reference to FIGS. 11 and 12, the mobile terminal 100 may be switched from one display mode to another display mode in response to a user input with vertical directivity being detected from a multimedia player screen and may be switched from a display mode to an equalizer mode or from one equalizer mode to another equalizer mode in response to a user input with horizontal directivity being detected from the multimedia player screen.

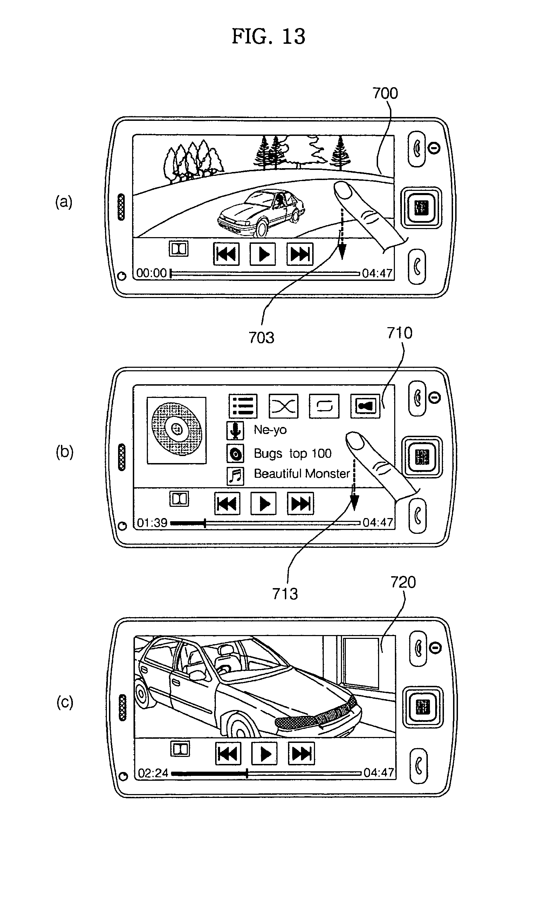

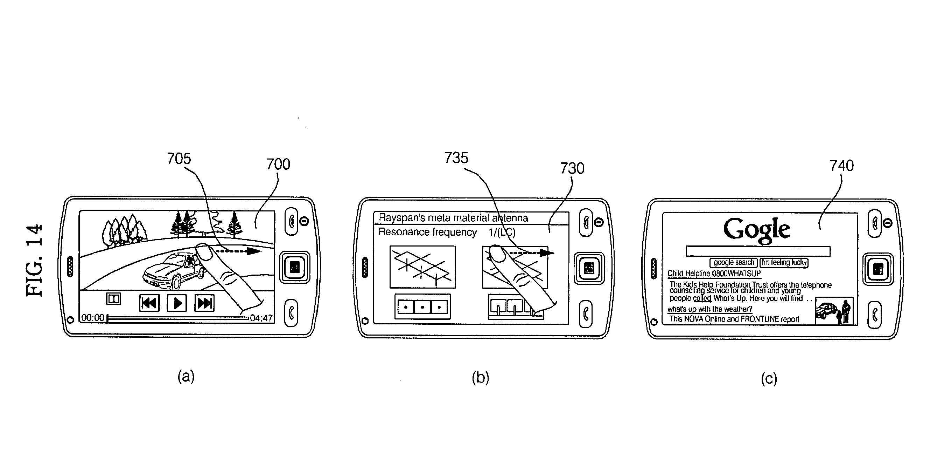

FIGS. 13 and 14 illustrate an operation of the mobile terminal 100 in response to user input with directivity being detected during the execution of multiple applications in a multitasking mode.

Referring to FIGS. 13(a) and 13(b), in response to a top-to-bottom flick or drag 703 being detected from a first application execution screen 700 during the execution of multiple applications in a multitasking mode, a second application execution screen 710, which belongs to the same application group as the first application execution screen 700, may be displayed.

Referring to FIGS. 13(b) and 13(c), in response to a top-to-bottom flick or drag 713 being detected from the second application execution screen 710, a third application execution screen 720, which belongs to the same application group as the second application execution screen 710, may be displayed.

Referring to FIGS. 14(a) and 14(b), in response to a left-to-right flick or drag 705 being detected from the first application execution screen 700, an application execution screen 730, which belongs to a different application group from the first application execution screen 700, may be displayed. Examples of an application group include a multimedia player group, a document viewer group, a web-surfing group, a game group, and the like. Referring to FIGS. 14(b) and 14(c), in response to a left-to-right flick or drag 735 being detected from the application execution screen 730, an application execution screen 740, which belongs to a different application group from the first application execution screen 700 and the application execution screen 730, may be displayed.

As described above with reference to FIGS. 13 and 14, it is possible to easily navigate between application execution screens belonging to the same application group in response to a user input with vertical directivity being detected and between application execution screens belonging to different application groups in response to a user input with horizontal directivity being detected.

As described above, it is possible to effectively control various operations performed by the mobile terminal 100 using a flick input or a drag input.

The mobile terminal according to the present invention and the operation control method thereof, according to the present invention are not restricted to the exemplary embodiments set forth herein. Therefore, variations and combinations of the exemplary embodiments set forth herein may fall within the scope of the present invention.

The present invention can be realized as code that can be read by a processor (such as a mobile station modem (MSM)) included in a mobile terminal and that can be written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to the present invention, it is possible to effectively control various operations performed by a mobile terminal by using a user input with directivity such as a flick input or a drag input. In addition, it is possible to improve the convenience of the manipulation of a mobile terminal by using a user input with directivity along with a typical key or touch input.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A mobile terminal, comprising:
a display to display images; and
a controller to display a first image, the controller to display a second image on the display in response to the mobile terminal receiving a first input with first directivity while the display displays the first image, the second image having a screen effect different than a current screen effect applied to the displayed first image, and the controller to display a third image on the display in response to the mobile terminal receiving a second input with second directivity while the display displays the second image, the third image being a different image than the second image.

2. The mobile terminal of claim 1,
wherein the controller to display a fourth image on the display in response to the mobile terminal receiving a third input with the first directivity while the display displays the third image, the fourth image having a screen effect different than a current screen effect applied to the displayed third image.

3. The mobile terminal of claim 2,
wherein the controller to display a fifth image on the display in response to the mobile terminal receiving a fourth input with fourth directivity while displaying the display, the fifth image obtained by applying a previous screen effect to an image currently being displayed on the display.

4. The mobile terminal of claim 1,
wherein the screen effect comprises a filter effect or a frame application effect.

5. The mobile terminal of claim 1,
wherein the screen effect comprises one of 'noise,' 'render,' 'brush Strokes,' 'video,' 'sharpen,' 'sketch,' 'stylize,' 'artistic,' 'distort,' 'texture,' 'pixelate,' or 'blur' effects.

6. The mobile terminal claim 1,
wherein each of the inputs is a flick input or a drag input.

7. The mobile terminal of claim 1,
wherein the controller to display an electronic document editor screen on the display, the controller to change a frame of the displayed electronic document editor screen in response the mobile terminal receiving the first input with first directivity while the display displays the electronic document editor screen, and the controller to change an editing tool for the electronic document editor screen in response to the mobile terminal receiving the second input with second directivity while the display displays the electronic document editor screen.

8. The mobile terminal of claim 1,
wherein the controller to further change a font of text for the electronic document screen in response to the mobile terminal receiving the third input with third directivity while the display displays the electronic document editor screen.

9. The mobile terminal of claim 1,
wherein the controller to display a multimedia player screen on the display, the controller to change the display from a first display mode to a second display mode in response to the mobile terminal receiving the first input with first directivity while the display displays the multimedia player screen, and the controller to change the multimedia player screen from a first sound effect mode to a second sound effect mode in response to the mobile terminal receiving the second input with second directivity while the display displays the multimedia player screen.

10. The mobile terminal of claim 9,
wherein the controller changes a color of edges of the displayed multimedia player screen when the display is changed from the first display mode to the second display mode.

11. The mobile terminal of claim 1,
wherein the controller to display a first application that corresponds to a first group and to display a second application that corresponds to the first group on the display, the controller to display a second application on the display that corresponds to the first group in response to the mobile terminal receiving the first input with first directivity while the display displays the first application, and the controller to display a previous application on the display that corresponds to a second group in response to the mobile terminal receiving the second input with second directivity while the display displays the first application.

12. The mobile terminal of claim 11,
wherein the controller performs execution of a plurality of applications in a multitasking mode.

13. The mobile terminal of claim 1,
wherein the controller to display a first webpage provided by a first website and to display a second webpage provided by the first website on the display, the controller to display the second webpage provided by the first website on the display in response to the mobile terminal receiving the first input with first directivity while the display displays the first webpage, and the controller to display a third webpage provided by a second website in response to the mobile terminal receiving the second input with second directivity while the display displays the first webpage.

14. An operation control method of a mobile terminal, the operation control method comprising:
displaying a first image on the display;
displaying a second image on the display in response to the mobile terminal receiving a first input with first directivity while the display displays the first image, the second image having a screen effect different than a current screen effect applied to the displayed first image; and
displaying a third image on the display in response to the mobile terminal receiving a second input with second directivity while the display displays the second image, the third image being a different image than the second image.

15. The operation control method of claim 14, further comprising:
displaying a fourth image on the display in response to the mobile terminal receiving a third input with the first directivity while the display displays the third image, the fourth image having a screen effect different than a current screen effect applied to the displayed third image.
